Europäisches Patentamt

European Patent Office

Office européen des brevets

(19)

(11) Publication number: **0 076 864**
**B1**

(12) **EUROPEAN PATENT SPECIFICATION**

(45) Date of publication of patent specification: **27.08.86**

(21) Application number: **82901158.4**

(22) Date of filing: **20.04.82**

(86) International application number:
**PCT/JP82/00133**

(87) International publication number:
**WO 82/03686 28.10.82 Gazette 82/26**

(51) Int. Cl.⁴: **G 01 N 3/30, G 01 M 7/00**

(54) **IMPACT DIAGNOSING DEVICE.**

(30) Priority: **20.04.81 JP 60743/81**
**13.02.82 JP 23102/82**

(43) Date of publication of application:
**20.04.83 Bulletin 83/16**

(45) Publication of the grant of the patent:
**27.08.86 Bulletin 86/35**

(84) Designated Contracting States:
**DE FR GB**

(56) References cited:
**US-A-3 502 983**
**US-A-3 550 434**
**US-A-3 759 085**
**US-A-4 004 450**
**US-A-4 157 655**

(73) Proprietor: **MITSUBISHI DENKI KABUSHIKI KAISHA**
**2-3, Marunouchi 2-chome Chiyoda-ku**
**Tokyo 100 (JP)**

(72) Inventor: **KISO, Mataichiro Mitsubishi Denki K.K.**
**Chuo Kenkyusho 80, Azanakano Minamishimizu Amagasaki-shi Hyogo 661 (JP)**
Inventor: **FUTAKAWA, Akemi Mitsubishi Denki K.K.**
**Chuo Kenkyusho 80, Azanakano Minamishimizu Amagasaki-shi Hyogo 661 (JP)**
Inventor: **FUKUNAGA, Tokio Mitsubishi Denki K.K.**
**Chuo Kenkyusho 80, Azanakano Minamishimizu Amagasaki-shi Hyogo 661 (JP)**

(74) Representative: **Lehn, Werner, Dipl.-Ing. et al Hoffmann, Eitle & Partner Patentanwälte Arabellastrasse 4 (Sternhaus) D-8000 München 81 (DE)**

Courier Press, Leamington Spa, England.

## Description

The present invention relates to insulation diagnosis apparatus for diagnosing the insulation condition of an insulation member for conductors.

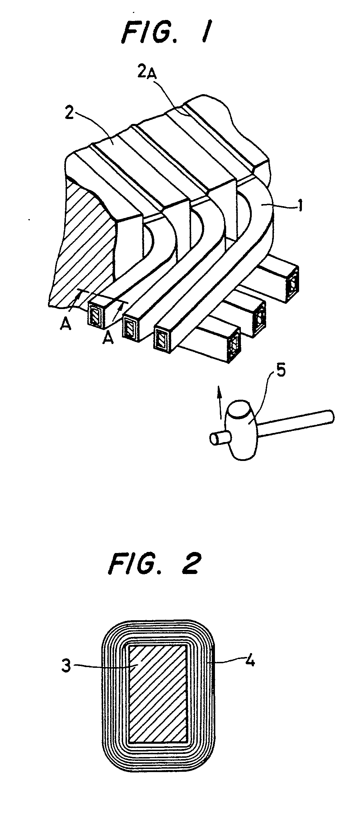

Figure 1 shows a conventional insulation testing method for a coil of a generator. In Figure 1 a coil (1) is inserted into a slot (2A) of a core (2). As is apparent from Figure 2 showing the schematic sectional view of the coil, the coil (1) is composed of a core wire (3) and an insulating member (4) surrounding the core wire (3). When such a coil (1) is used for a generator, the insulating member (4) is, in general, fixedly and in close contact with the core wire (3). Therefore when the coil (1) is subjected to striking force by a hammer (5), the coil (1) produces a struck sound "kon, kon" or "karn, karn" in accordance with the amount of the sectional area and the length of the core (1). A tester listens to the strike sound to estimate the condition of the insulation of the insulating member (4) at each portion thereof on the basis of his perception developed from long experience.

It is well-known that even the insulating member (4) of the coil (1) which was initially estimated as being in good condition gradually deteriorates in insulation efficiency over a period of years. In deterioration of the insulation efficiency of the insulating member (4), the insulating member (4) covering the core wire (3) swells or peels off.

In this case, upon the application of the striking force to the insulating member (4) by the hammer (5), the insulating member (4) produces a sound such as "boko, boko", which is duller than that of a good condition.

The tester has estimated hitherto the strike sounds produced in the good condition and the inferior condition by his sense of hearing. However, it is difficult and sometimes misleading to estimate the strike sound in the premises of a power plant or a factory in which an ambient noise is large. Further, if a large striking force is applied to the insulating member (4) by the hammer (5) for the purpose of avoiding the misjudgement of the estimation, the insulation efficiency of the insulating member (4) becomes undesirably worsened even when the insulating member (4) is in a good condition. Therefore it is necessary to restrict the strike force due to the hammer (5). Furthermore the standard of the estimation for the good or bad condition is undesirably changed in accordance with the body condition of the tester at the testing time especially near the end of a working day.

US—A—4 157 655 discloses a coal-shale interface detection system. The apparatus comprises a reciprocating hammer or ram 10 provided with an accelerometer 56 for sensing the impact on and penetration into floor or ceiling material of a coal mine. The electrical signals produced are employed to distinguish between coal and shale. Thus, there is no suggestion at all of utilizing impact generated signals to detect flaws or faults in electrical insulation. Furthermore, there is no suggestion of automated techniques for evaluating the shape of the detected signal

US—A—3 502 983 discloses apparatus for measuring the peak to average ratio of a test signal. There is no suggestion of detecting the ratio of peak value to width of the signal or of any other method of determining the shape of the signal.

An object of the present invention is to provide insulation diagnosis apparatus capable of reliably diagnosing a good or bad condition of an insulation member to be struck on the basis of a detected reaction force.

According to the present invention, there is provided an insulation diagnosis apparatus for diagnosing the insulation condition of an insulation member for conductors comprising: means for striking said insulation member to be diagnosed; means for detecting a reaction force on the striking means produced by a strike applied by said striking means; means for producing a strike signal representing the time variation of the amplitude of said reaction force; and judging means for judging the good or bad condition of said insulation member on the basis of said strike signal, the judging means comprising a peak value holding circuit for holding a peak value of said strike signal, signal width detecting means for detecting a signal width of said strike signal in the axis of time, and a divider for obtaining the ratio of said peak value and said signal width.

Figure 1 is a perspective view showing a conventional method of testing the good or bad condition of insulation, in which coils of a generator are shown;

Figure 2 is a sectional view of an insulated conductor taken along the line A—A in Figure 1;

Figure 3, Figure 4 and Figure 5 are block diagrams showing a first embodiment of the present invention, Figure 4 being a block diagram showing a divider in Figure 3, and Figure 5 being a block diagram showing a judging device in Figure 3;

Figure 6 (a), (b), (c), (d) and (e) show output waveforms of a strike waveform amplifier, a Schmitt circuit, an integrator, a peak value holding circuit, and a negative pulse generating circuit respectively, in order;

Figure 7 is a perspective view of the generator's coil having an insulating portion; and

Figure 8 is a block diagram showing a portion of a further embodiment of the present invention.

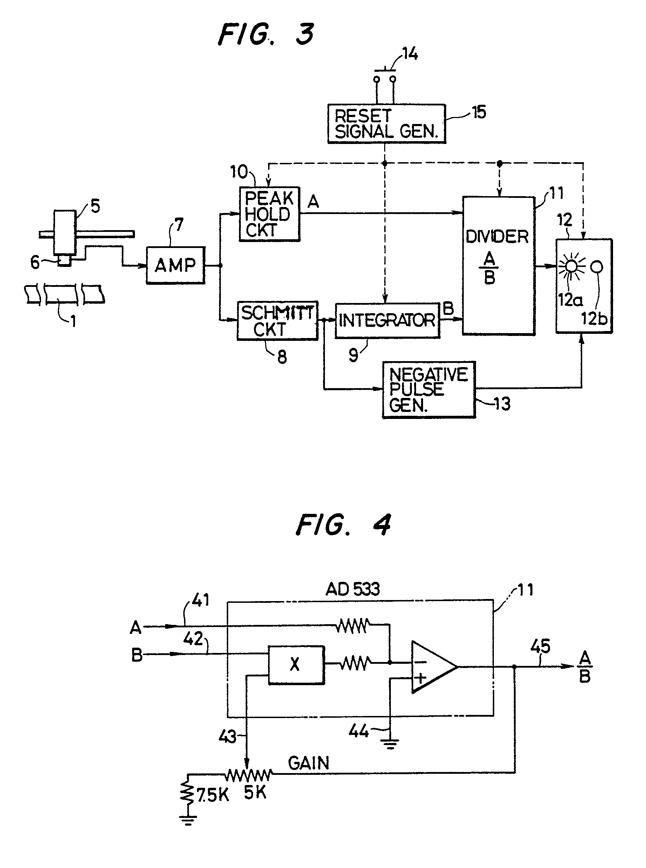

Referring now to Figures 3, 4 and 5 showing the best mode of performing the present invention, its construction and operation will be explained hereinafter. In Figure 3 the same reference numerals are used for the same features as in Figure 1. In Figure 3 a pressure-sensitive element (6) is fixedly mounted on the strike surface of a hammer (5). An amplifier (7) is connected to the pressure-sensitive element (6) to amplify the output of the pressure-sensitive element (6). A Schmitt circuit (8) is connected to the amplifier (7) to output an output voltage only when the magnitude of the output signal exceeds a predetermined level.

An integrator (9) is connected to the output of the Schmitt circuit (8) to integrate the output signal of the Schmitt circuit (8). A conventional commercially available integrator may be used for the integrator (9).

The peak value holding circuit (10) is connected to the amplifier (7) as well as the Schmitt circuit (8) to continuously hold the maximum value of the output signal of the amplifier (7) and to output a signal representing the maximum value.

The divider (11) is connected to the integrator (9) and the peak value holding circuit (10) and has the function of dividing the output signals from them.

A specific construction of the divider (11) is such that as shown in Figure 4, using the module AD 588 by the Analog Devices Company of the U.S.A. In Figure 4 numerals (41) and (42) denote output leads for receiving the output signal A of the peak value holding circuit (10) and the output signal B of the integrator (9). Numeral (43) denotes an input lead for regulating the gain of the divider (11), numeral (44) an earth, and numeral (45) an output lead for outputting the value A/B.

The judging device (12) is connected to the divider (11) for judging the good or bad condition of the insulation of the generator's conductor as shown in Figure 2 by comparing the magnitude of the output signal of the divider (11) with the reference value. There are provided a lamp (12a) for indicating the good condition of the insulation and a lamp (12b) for indicating the bad condition. The lamps (12a) and (12b) may be, for example, light-emitting diodes.

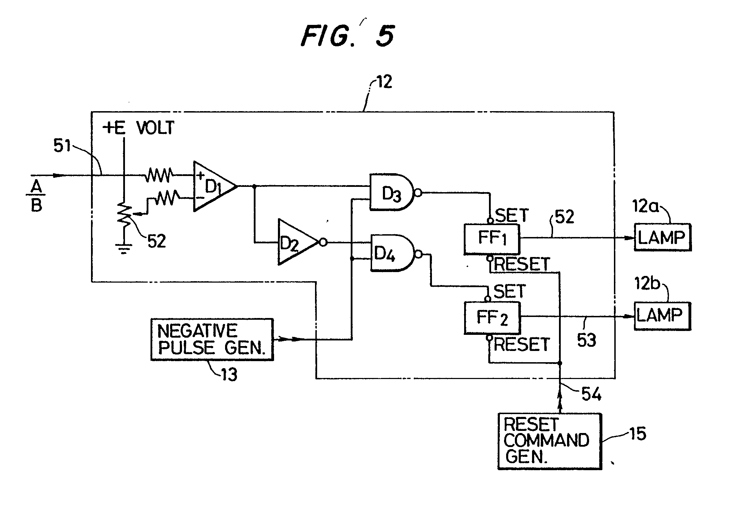

Referring to Figure 5 a specific construction of the judging device (12) is shown. In Figure 5 numeral (51) denotes an input lead for receiving the output signal representing the value A/B of the divider (11), and $D_1$ denotes a comparator connected to the input lead (51) and a variable resistor (52) for generating a reference voltage corresponding to the reference value. A voltage +E Volts is applied to the variable resistor (52). The module VA—741CE by Texas Instruments Corporation may be used for the comparator ($D_1$). ($D_2$) denotes an inverter for inverting the output of the comparator ($D_1$) which may be formed by the module SN7404 by Texas Instruments Corporation. ($D_3$) denotes a NAND circuit for receiving the output signal of the comparator ($D_1$) and the negative pulse generating circuit (13), and ($D_4$) denotes a NAND circuit for receiving the output signal of the negative pulse generating circuit (13) and the output of the inverter ($D_2$). Both of the NAND circuits may be formed by using the module SN7400 of Texas Instruments Corporation.

($FF_1$) denotes a flip-flop set by the output signal of the NAND circuit ($D_3$) to generate a driving signal for driving the lamp (12a), and the flip-flop ($FF_1$) usually outputs a signal maintained in a low level by the output signal of a reset signal generating circuit (15).

($FF_2$) denotes a flip-flop set by the output signal of the NAND circuit ($D_4$) to generate a driving signal for driving the lamp (12b). Both of the flip-flops ($FF_1$) and ($FF_2$) may be formed by using a module SN7474 by Texas Instruments Corporation.

The operation of the judging device (12) is as follows.

When the value A/B is larger than the reference value, only the lamp (12a) is energized. The operation for energizing the lamp (12a) will be explained hereinafter.

When the value A/B is larger than the reference voltage received at the negative terminal of the comparator ($D_1$), the output of the comparator ($D_1$) becomes positive (+). Then a negative pulse from the negative pulse generating circuit (13) is received by the judging device (12), the output of the NAND circuit ($D_3$) assumes a high level (H). When a voltage of high level is applied to the SET terminal of the flip-flop ($FF_1$) beforehand reset by a reset command generator, the flip-flop ($FF_1$) is inverted to energize the lamp (12a) formed by a light-emitting diode.

Further, when the value A/B is larger than the reference value, the output signal (+) of the comparator ($D_1$) is inverted by the inverter ($D_2$), then the negative signal (−) is inputted into the NAND circuit ($D_4$). Therefore the output of the NAND circuit ($D_4$) does not assume a high level (H) even when the negative pulse is applied to the other input terminal of the NAND circuit ($D_4$) thereby not to reverse the flip-flop ($FF_2$).

On the other hand, when the value A/B is smaller than the reference value only the lamp (12b) is energized. The operation of the energization is as follows. Where the value A/B is less than the reference voltage, the output of the comparator ($D_1$) is maintained negative. Therefore the output of the NAND circuit ($D_3$) does not assume a high level for energizing the lamp (12a) even when the negative pulse is applied to the NAND circuit ($D_3$). Further, when the output of the comparator ($D_1$) is negative, the output of the inverter ($D_2$) becomes positive (+). Accordingly, when the negative pulse signal is applied to the NAND circuit ($D_4$), the output of the NAND circuit ($D_4$) assumes a high level to reverse the flip-flop ($FF_2$) from the reset state to the set state thereby energizing the lamp (12b).

Further the judging device (12) receives the output signal of the Schmitt circuit (8) through the negative pulse generating circuit (13). A push switch (14) is connected to the reset command generator (15) to actuate it when the push switch (14) is closed. The command signal of the reset signal generating circuit (15) is applied to the integrator (9), the peak value holding circuit (10), the divider (11) and the judging device (12) to reset operation thereof.

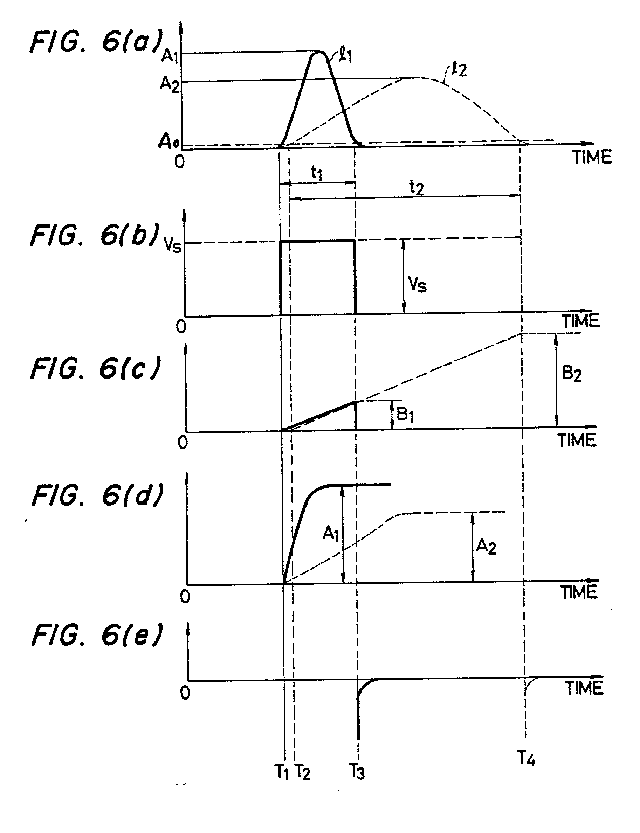

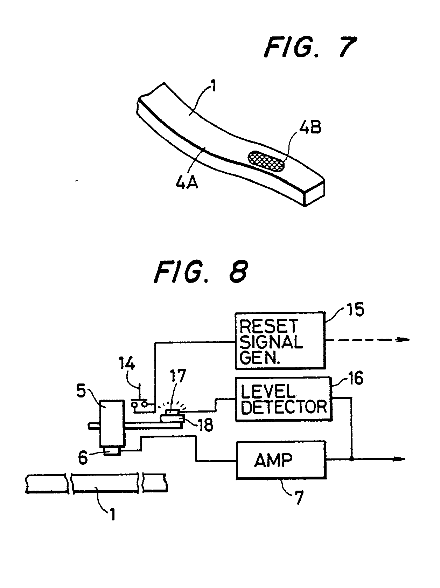

Referring now to the operation of the strike diagnosis apparatus, an application example of the generator's coil (1) will be explained with reference to Figure 7. Numerals (4A) and (4B) denote a good insulation portion and a defective insulation portion respectively. When the good insulation portion (4A) and the defective insulation portion of the generator's coil (1) are struck by the hammer (5), the striking force given to the hammer (5) as reaction force differs in accordance with the differing hardness of the coil's surfaces. Therefore the pressure-sensitive element (6) mounted on the hammer (5) for converting the striking force to an electric signal produces different output signals such as shown by a solid line and a dotted line of Figure 6(a). The solid and dotted lines show the signals from the good and defective insulation portions respectively.

Where a hard surface of the insulating member (4) is to be applied with the striking force, that is the good insulation portion (4A), the output signal of the pressure-sensitive element (6) has usually a waveform having a large crest value and small width of time as shown by the solid line, on the other hand in the case of a soft surface of the insulating member (4), that is the defective insulation portion (4B), the output signal of the pressure-sensitive element (6) has usually a waveform having a small crest value and large width of time as shown by the dotted line. Such output signals of the pressure-sensitive element (6) are amplified by the amplifier (7), and the output signal of the amplifier (7) becomes a similar waveform with a larger magnitude. The output signal of the amplifier (7) is applied to the Schmitt circuit (8) and the peak value holding circuit (10). The Schmitt circuit (8) produces the output voltage $V_s$ only when the magnitude of the input signal exceeds the value $A_0$ in Figure 6(a). Firstly, a signal corresponding to the good insulation portion (4A) and secondly a signal corresponding to the defective insulation portion (4B) will be explained hereinafter. Upon application of the solid-line waveform having the maximum value $A_1$ to the Schmitt circuit (8), the voltage at the time $T_1$ is $A_0$ as shown in Figure 6(a), so that the output voltage of the Schmitt circuit (8) becomes $V_s$ as shown in Figure 6(b). The output voltage $V_s$ of the Schmitt circuit (8) is maintained for the period $t_1$, i.e. the period from the point $T_1$ of time to the point $T_3$ of time at which the input voltage is less than $A_0$. Upon application of the output voltage $V_s$ of the Schmitt circuit (8) to the integrator (9), the integrator (9) starts the integrating operation at the point $T_1$ of time and stops the integrating operation at the point $T_3$ of time thereby to produce the output voltage $B_1$. The output voltage $B_1$ is applied to the divisor side of the divider (11). On the other hand, the output signal of the amplifier (7) is also applied to the peak value holding circuit (10), and the output voltage of the peak value holding circuit (10) is continuously maintained in the maximum voltage $A_1$ as shown by the solid line in Figure 6(d).

The maximum voltage $A_1$ is applied to the dividend side of the divider (11). Then the divider (11) outputs the output voltage proportional to the ratio $A_1/B_1$ or $A_1/t_1$ to input it to the judging device (12).

Secondly, the operation of the Schmitt circuit (8) and the peak value holding circuit (10) with respect to the signal corresponding to the defective insulation portion (4B) will be explained hereinafter. Upon application of the signal as shown by the dotted line having the maximum value $A_2$ in Figure 6(a) to the Schmitt circuit (8), the voltage exceeds the value $A_0$ at the period from the point $T_2$ of time to the point $T_4$ of time, so that the output voltage $V_s$ of the Schmitt circuit (8) becomes $V_s$ at the period $t_2$. When the output voltage $V_s$ is applied to the integrator (9), the integrator (9) produces the output voltage the final value of which is $B_2$ as shown by the dotted line in Figure 6(c). The final value $B_2$ is applied to the divider (11). On the other hand, the peak value holding circuit (10) holds the maximum voltage $A_2$ as shown by the dotted line of Figure 6(d), so that the maximum voltage $A_2$ is applied to the dividend side of the divider (11). Then the divider (11) produces the output voltage proportional to the ratio $A_2/B_2$ or $A_2/t_2$ to input it to the judging device (12).

The negative pulse generating circuit (13) is arranged to produce a negative pulse at the point $T_3$ or $T_4$ of time, i.e. the instant that the output signal of the Schmitt circuit (8) falls to zero from the voltage $V_s$ as shown in Figure 6(e). After the negative pulse is received by the judging device (12), the output voltage applied from the divider (11) is compared with a reference voltage which is arbitrarily set in the judging device (12). As a result of the comparison the lamp (12a) for indicating the good condition of insulation is energized when the output voltage of the divider (11) is larger than the reference voltage, on the other hand, when the output voltage of the divider (11) is smaller than the reference voltage the lamp (12b) is energized to indicate the defective condition of insulation.

When judging the condition of the insulating member (4) by the judging device (12), it is preferable for obtaining a clear judgement to compare with respect to the ratio $A_1/t_1$, $A_2/t_2$ between the time width and the maximum value of the input signal, rather than to merely compare with respect to the maximum value of the input signal applied to the judging device (12). In Figure 6(a), if, for example, $A_1 : A_2 = 3 : 2$ and $t_1 : t_2 = 1 : 3$, in the case of the comparison of the maximum value of the input waveform the ratio $A_1/A_2$ becomes 1.5, in contrast with the other comparison of $A_1/t_1/A_2/t_2 = 4.5$. Further in the comparison of the maximum value of the input waveform it becomes difficult to judge the good insulation portion (4A) and the defective insulation portion (4B) due to the input waveform, because of deviations of the striking force of the hammer (5) for striking the coil (1). However, according to the embodiment of the present invention, the maximum amplitude is divided by the time width, so that the magnitude of the striking force due to the hammer (5) is substantially irrelevant.

As stated above, according to the embodiment of the present invention a clear difference with respect to the good insulation portion (4A) and the defective insulation portion (4B) can be obtained in contrast to the method comparing the maximum values of the input waveforms.

Thus the first judgement is terminated, and then if the tester pushes the push switch (14) to effect further judgement a reset command signal is produced from the reset command generator (15) to apply it to the integrator (9), the peak value holding circuit (10), the divider (11) and the judging device (12) thereby to return the initial state thereof for starting the judging operation.

Figure 8 shows a block diagram indicating a portion of another embodiment of the strike diagnosis apparatus of the present invention. In Figure 8, a level detector (16) produces an output therefrom when the output of the amplifier (7) is saturated.

There is provided an overload lamp (17) mounted on the hammer (5) via a cushion (18) and energized by the output of the level detector (16). In the embodiment of Figure 8, the push switch (14) is provided on or in adjacent to the hammer (5), in contrast with the embodiment of Figure 3 in which the push switch (14) is provided remote from the hammer (5) on the strike diagnosis apparatus. Therefore, according to the embodiment of Figure 8, the push switch (14) can be closed each strike operation of the hammer (5) to effect smoothly a cyclic operation of strike, judgement and reset by means of the construction that the push switch (14) is provided on the handle or adjacent to the hammer (5), in contrast with the embodiment of Figure 3 in which the tester must go to the strike diagnosis apparatus providing the push switch (14) to push the push switch (14) each judgement. In this case of the embodiment of Figure 8, there is provided a delay circuit within the reset signal generating circuit (15) for outputting the reset signal after judgement of the good or bad condition of the insulating member (4) is terminated.

The embodiment of Figure 3 does not consider a saturation of the output signal from the amplifier (7). In the saturation of the output signal from the amplifier (7), reliability of judgement results is surely deteriorated. Thus, according to the embodiment of Figure 8 the level detector (16) is connected to the output side of the amplifier (7), and the overload lamp (17) energized by the output of the level detector (16) is mounted on the handle of the hammer (5) through the cushion (18), further the level detector (16) is composed to output a constant output voltage when the output of the amplifier (7) is saturated. Therefore, if the striking force due to the hammer (5) is excessive, the overload lamp (17) is energized to indicate the excessive striking force by the hammer (5). In this case the saturation of the amplifier (7) can be avoided by making small the striking force due to the hammer (5) or by reducing the gain of the amplifier (7).

In the above-mentioned embodiments the indication of the judgement is made by the lamps (12a) and (12b), but alternatively it may be made by a meter or a digital read-out to obtain a similar effect. Further, although the insulating member (4) of the coil (1) is diagnosed in the above-mentioned embodiments, the object to be diagnosed is not limited to the coil (1), and the present application can also be applied to estimating the hardness of an object.

As mentioned above, according to the embodiment of the present invention, a precise testing can be achieved regardless of the ambient noise and the body condition of the tester in such a manner that the striking signal detected by the electromechanical converting element mounted on the striking body is analyzed in frequency and the amount of the level reduction are obtained to diagnose the good or bad condition of the object to be tested.

The present invention can be utilized in an insulation test of a generator's coil, an electric motor's coil and the like.

**Claims**

1. An insulation diagnosis apparatus for diagnosing the insulation condition of an insulation member (4) for conductors comprising: means (5) for striking said insulation member (4) to be diagnosed; means (6) for detecting a reaction force on the striking means (5) produced by a strike applied by said striking means (5); means for producing a strike signal representing the time variation of the amplitude of said reaction force; and judging means (12) for judging the good or bad condition of said insulation member (4) on the basis of said strike signal, the judging means (12) comprising a peak value holding circuit (10) for holding the peak value of said strike signal, signal width detecting means (8, 9) for detecting the signal width of said strike signal in the axis of time, and a divider (11) for obtaining the ratio of said peak value and said signal width.

2. An insulation diagnosis apparatus according to claim 1, wherein said signal width detecting means (8, 9) is composed of a Schmitt circuit (8) for producing an output signal when the output of said peak value holding circuit exceeds a predetermined level, and an integrator (9) for integrating the output of said Schmitt circuit (8), and wherein the contents of said peak value holding circuit (10), said Schmitt circuit (8), said integrator (9) and said divider (11) are reset by a reset signal.

3. An insulation diagnosis apparatus according to claim 1 or 2 further comprising an amplifier (7) for amplifying said strike signal and a display device (16, 17) for displaying the saturation state of the output of said amplifier (7).

4. An insulation diagnosis apparatus according to claim 3, wherein said display device (16, 17) is composed of a level detector (16) for detecting the level of the output of said amplifier (7) to produce an output thereof when the detected level exceeds a predetermined value, and an overload lamp (17) for being energized by the output of said level detector (16).

**Patentansprüche**

1. Isolierungsdiagnosegerät zum Diagnostizieren des Isolierungszustandes eines Isolierungsteils (4) für Leiter, gekennzeichnet durch eine Einrichtung (5) zum Schlagen des zu diagnostizierenden Isolierungsteils (4), Mittel (6) zum Erfassen einer bei einem Schlag durch die Schlageinrichtung (5) verursachten Reaktionskraft auf die Schlageinrichtung (5), Mittel zum Erzeugen eines Schalgsignals, welches die Zeitveränderung der Reaktionskraftamplitude darstellt, und Beurteilungsmittel (12) zum Beurteilen des guten oder schlechten Zustandes des Isolierungsteils (4) basierend auf dem Schlagsignal, wobei das Beurteilungsmittel (12) einen Scheitelwerthaltekreis (10) zum Halten des Schlagsignalscheitelwertes, Signalbandbreitenerfassungsmittel (8, 9) zum Erfassen der Signalbreite des Schlagsignals in der Zeitachse und einen Teiler (11) zum Erhalten des Verhältnisses des Scheitelwerts und der Signalbreite aufweist.

2. Isolierungsdiagnosegerät nach Anspruch 1, dadurch gekennzeichnet, daß das Signalbreitenerfassungsmittel (8, 9) aus einer Schmittschaltung (8) zum Erzeugen eines Ausgangssignals, wenn der Ausgang des Scheitelwerthaltekreises einen vorbestimmten Wert überschreitet und einem Integrator (9) zum Integrieren der Ausgangsgröße der Schmittschaltung (8) zusammengesetzt ist, und daß die Inhalte des Scheitelwerthaltekreises (10), der Schmittschaltung (8), des Integrators (9) und des Teilers (11) durch ein Rückstellsignal zurückgestellt werden.

3. Isolierungsdiagnosegerät nach Anspruch 1 oder 2, dadurch gekennzeichnet, daß es weiter einen Verstärker (7) zum Verstärken des Schlagsignals und eine Anzeigeeinrichtung (16, 17) zum Anzeigen des Sättigungszustandes der Ausgangsgröße des Verstärkers (7) enthält.

4. Isolierungsdiagnosegerät nach Anspruch 3, dadurch gekennzeichnet, daß die Anzeigeeinrichtung (16, 17) aus einem Pegeldetektor (16) zum Erfassen des Ausgangspegels des Verstärkers (7), um eine Ausgangsgröße davon zu erzeugen, wenn der erfaßte Pegel einen vorbestimmten Wert überschreitet, und einer Überlastlampe (17) zum Einspeisen durch die Ausgangsgröße des Pegeldetektors zusammengesetzt ist.

**Revendications**

1. Dispositif de diagnostic d'isolation pour diagnostiquer la qualité d'isolation d'un élément isolant (4) pour conducteurs, comprenant: un moyen (5) pour frapper ledit élément isolant (4) devant subir le diagnostic; un moyen (6) pour détecter la force de réaction sur le système de frappe (5) produite par un coup porté par ledit système de frappe (5); un moyen pour produire un signal de frappe représentant la variation dans le temps de l'amplitude de ladite force de réaction; et un moyen d'estimation (12) qui estime la bonne ou la mauvaise qualité de l'élément isolant (4) sur la base dudit signal de frappe, le moyen d'estimation (12) comprenant: un circuit de maintien de la valeur crête (10) pour maintenir la valeur crête dudit signal de frappe; un moyen de détection de la largeur du signal (8, 9) pour détecter la largeur dudit signal de frappe selon l'axe des temps, et un diviseur (11) pour obtenir le rapport entre ladite valeur crête et ladite largeur du signal.

2. Dispositif de diagnostic d'isolation selon la revendication 1, caractérisé en ce que ledit moyen de détection de la largeur du signal (8, 9) est composé d'un circuit de Schmitt (8) qui produit un signal de sortie lorsque la sortie dudit circuit de maintien de la valeur crête excède un niveau prédéterminé, et un intégrateur (9) qui intègre la sortie dudit circuit de Schmitt (8), et caractérisé en ce que les contenus dudit circuit de maintien de la valeur crête (10), dudit circuit de Schmitt (8), dudit intégrateur (9) et dudit diviseur (11) sont remis à zéro par un signal de remise à zéro.

3. Dispositif de diagnostic d'isolation selon l'une quelconque des revendications 1 et 2, caractérisé en ce qu'il comprend, en outre, un amplificateur (7) pour amplifier ledit signal de frappe, et un dispositif de visualisation (16, 17) pour visualiser l'état de saturation de la sortie dudit amplificateur (7).

4. Dispositif de diagnostic d'isolation selon la revendication 3, caractérisé en ce que ledit dispositif de visualisation (16, 17) est composé d'un détecteur de niveau (16) pour détecter le niveau de la sortie dudit amplificateur (7) afin de produire une sortie lorsque le niveau détecté excède une valeur prédéterminée, et un témoin de surcharge (17) qui est alimenté en énergie par la sortie dudit détecteur de niveau (16).

0 076 864

# FIG. 1

# FIG. 2

*FIG. 3*

*FIG. 4*

FIG. 5

FIG. 6(a)

$A_1$

$A_2$

$A_0$

$l_1$

$l_2$

0                                    TIME

$t_1$

$t_2$

FIG. 6(b) $V_S$

$V_S$

0                                    TIME

FIG. 6(c)

$B_2$

$B_1$

0                                    TIME

FIG. 6(d)

$A_1$

$A_2$

0                                    TIME

FIG. 6(e)

0                                    TIME

$T_1$ $T_2$        $T_3$                    $T_4$

4

## FIG. 7

## FIG. 8